Europäisches Patentamt

European Patent Office

Office européen des brevets

(19)

(11) Veröffentlichungsnummer: **0 167 941**
A2

(12) **EUROPÄISCHE PATENTANMELDUNG**

(21) Anmeldenummer: **85108024.2**

(22) Anmeldetag: **28.06.85**

(51) Int. Cl.⁴: **G 01 L 13/02**

(30) Priorität: **09.07.84 DE 3425198**

(43) Veröffentlichungstag der Anmeldung:
**15.01.86 Patentblatt 86/3**

(84) Benannte Vertragsstaaten:
**AT BE CH DE FR GB IT LI NL**

(71) Anmelder: **Siemens Aktiengesellschaft
Berlin und München Wittelsbacherplatz 2
D-8000 München 2(DE)**

(72) Erfinder: **Schwaier, Arnold, Dipl.-Ing.
Hermann-Löns-Weg 28
D-7516 Karlsbad(DE)**

(54) **Differenzdruck-Messzelle.**

(57) Bei einer Differenzdruck-Meßzelle mit Halbleiter-Meßmembran (14) ist diese von einer Verdickung (16) mit rechteckigem Querschnitt umgeben, auf die eine Ringmembran (17) und ein Einspannrand (5) folgt. Die genannten Teile bilden eine zwei Meßkammern (10, 11) trennende bewegliche Wand (4) und sind aus einer Halbleiterscheibe herausgearbeitet.

In den zur Membranebene parallelen Bodenflächen der Meßkammern (10, 11) sind Ringnuten (18, 19) angebracht, die über Druckzuleitungen (12, 13) mit den von Trennmembranen (6,7) abgeschlossenen Vorkammern (8, 9) verbunden sind. Der Durchmesser der Ringnuten entspricht dem mittleren Durchmesser der die Meßmembran (14) umgebenden Verdickung (16), ihre Breite ist kleiner als der Abstand zwischen den Oberkanten der Verdickung (16).

Bei Auftreten eines Überdrucks in einer der Meßkammern (10 oder 11) wird die gegenüberliegende Ringnut durch die plane Stirnfläche der Verdickung (16) verschlossen und so ein weiterer, zur Beschädigung der Meßmembran führender Druckabfall verhindert.

Anwendungsgebiet der Erfindung sind Differenzdruck-Meß-umformer mit Siliziummembran.

FIG 1

EP 0 167 941 A2

Siemens Aktiengesellschaft -1-  Unser Zeichen
Berlin und München                VPA 84 P 4428

## Differenzdruck-Meßzelle

Die Erfindung bezieht sich auf eine Differenzdruck-Meßzelle mit zwei flüssigkeitsgefüllten, mit Druckzuleitungen versehenen Meßkammern, die durch eine gemeinsame, eine zentrisch angeordnete Meßmembran enthaltende bewegliche Wand getrennt sind, wobei die bewegliche Wand aus einer Halbleiterscheibe besteht, deren als Meßmembran ausgebildeter zentrischer Teil von einer kreisförmigen Verdickung mit trapezförmigem Querschnitt umgeben ist.

Es sind derartige Meßzellen bekannt, bei denen im Überlastfall die Meßkammern nach außen abschließende Trennmembranen sich gegen entsprechend ausgebildete Membranbetten anlegen, wodurch die Meßkammer abgeschlossen und ein Ansteigen des Drucks in der Kammer über einen vorgegebenen Grenzwert hinaus verhindert wird. Diese Art der Überlastsicherung erfordert jedoch einen erheblichen fertigungstechnischen Aufwand.

Es besteht deshalb die Aufgabe, für Differenzdruck-Meßzellen der eingangs genannten Art eine andere Form der Überlastsicherung zu finden.

Zur Lösung der Aufgabe wird von einem anderen, an sich bekannten Prinzip der Überlastsicherung, nämlich der Verwendung von bei Überlast ansprechenden, die Druckzuleitung verschließenden Ventilkörpern ausgegangen. Die Differenzdruck-Meßzelle, mit der die Aufgabe gelöst ist, weist die im Anspruch 1 gekennzeichneten Merkmale auf. Als Ventilkörper wirkt hier die in der beweglichen Wand angebrachte kreisförmige Verdickung, die die zentrische Meßmembran umgibt.

Sp 4 Scl / 03.07.1984

Das Anbringen der Ringnuten als Druckzuleitungsanschluß
in den Böden der Meßkammern (z. B. durch Ätzprozesse) ist
herstellungstechnisch weit weniger aufwendig als die Fertigung der Membranbetten für Trennmembranen als Überlastsicherung. Bei der Verwendung von nicht kreisrunden Membranen sind die die Meßmembran umgebende Verdickung und
die Ringnuten in den Bodenflächen der Meßkammern entsprechend geformt.

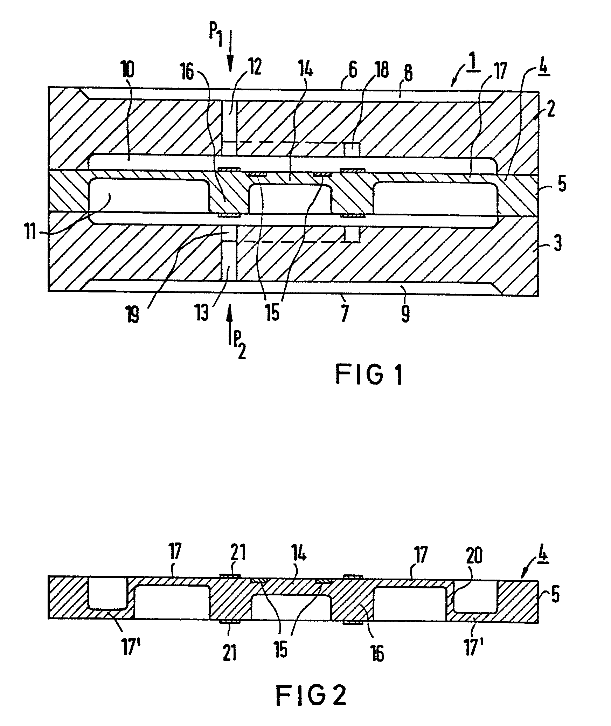

Ein Ausführungsbeispiel einer erfindungsgemäßen Meßzelle
ist schematisch in der Figur 1 dargestellt,
Figur 2 zeigt eine andere Ausführungsform der beweglichen
Wand mit Meßmembran.

Figur 1: Das Gehäuse der Differenzdruck-Meßzelle 1 besteht
im wesentlichen aus zwei zylindrischen Gehäusekörpern 2
und 3, zwischen denen eine bewegliche Wand 4 mit ihrem
verdickten Einspannrand 5 befestigt ist.

Die außenliegenden Stirnseiten der Gehäusekörper 2 und 3
sind mit flachen Vertiefungen versehen, welche durch
Trennmembranen 6 und 7 abgeschlossen sind und so die Vorkammern 8 und 9 bilden. Auf die Trennmembranen 6 und 7 wirken gegensinnig die Meßdrücke P1 und P2, deren Differenzdruck gemessen werden soll.

Die innenliegenden Stirnseiten der Gehäusekörper 2 und 3
sind ebenfalls mit flachen Ausnehmungen versehen, welche
die Meßkammern 10 und 11 bilden und von der beweglichen
Wand 4 voneinander getrennt sind.
Von den Vorkammern 8 und 9 führen Druckleitungen 12 und 13
in die Meßkammern 10 und 11.
Alle Hohlräume innerhalb der Meßzelle 1 sind mit einer
nicht-kompressiblen Flüssigkeit gefüllt zur hydraulischen
Druckübertragung von den Trennmembranen 6 und 7 auf die
Meßmembran 14, die den zentrischen Teil der beweglichen
Wand 4 bildet.

In einer bevorzugten Ausführungsform ist die bewegliche Wand 4 einstückig aus einer Halbleiterscheibe hergestellt, der Abgriff der druckproportionalen Auslenkung der Meßmembran 14 erfolgt über integrierte Halbleiter-Dehnungsmeßstreifen 15.

Die Meßmembran 14 ist von einer kreisförmigen Verdickung 16 mit trapezförmigem bzw. rechteckigem Querschnitt umgeben, wobei die parallelen Seiten vorzugsweise in den Stirnflächen der Halbleiterscheibe liegen. Auf die Verdickung 16 folgt ein ringmembranartiger Abschnitt 17 mit weicherer Federcharakteristik als die der Meßmembran.

Die Druckzuleitungen 12 und 13 in den Gehäusekörpern 2 und 3 münden in ringförmige Nuten 18, 19 in den zur Membranebene parallelen Bodenflächen der Meßkammern 10 und 11.
Der mittlere Durchmesser der Nuten 18, 19 entspricht dem der die Meßmembran 14 umgebenden Verdickung 16, ihre Breite ist kleiner als der Abstand zwischen den Oberkanten der Verdickung 16.

Zur Funktion: Beim Auftreten eines Überdrucks in der Differenzdruck-Meßzelle, beispielsweise durch Ausfall des Drucks P2, wird die bewegliche Wand 4 so weit ausgelenkt, daß die kreisringförmige, plane Stirnfläche der Verdickung 16 auf der Nut 19 aufliegt, diese verschließt und somit einen weiteren, zur Beschädigung der Meßmembran 14 führenden Druckabfall in der Meßkammer 11 verhindert.
Fällt der Druck P1 aus, wird entsprechend die Nut 18 verschlossen.

In Figur 2 ist ein anderes Ausführungsbeispiel der aus einer Halbleiterscheibe durch Ätzen einstückig hergestellten beweglichen Wand 4 gezeigt.
Der ringmembranartige Abschnitt zwischen dem Einspannrand 5 und der die Meßmembran 14 umgebenden Verdickung 16 besteht hier aus zwei konzentrischen Abschnitten 17 und 17´, wobei der an den Fassungsrand 5 anschließende Abschnitt etwa in der Ebene der einen Stirnfläche der Halbleiterscheibe, der andere Teil 17 in der Ebene der anderen Stirnfläche der Halbleiterscheibe liegt. Beide Abschnitte 17 und 17´ sind über ein hohlzylindrisches Zwischenstück 20 miteinander verbunden.

Mit dieser Ausführung kann eine besonders weiche Federcharakteristik der Ringmembranen und entsprechend ein leichtes Ansprechen auf Überdruck erzielt werden.

Auf den den Ringnuten 18 und 19 gegenüberliegenden Teilen der Stirnflächen der Verdickung 16 können dünne Schichten 21 aufgebracht werden zur Verbesserung der Dichtwirkung im Überlastfall zwischen beweglicher Wand 4 und den Nuten 18 oder 19.

3 Patentansprüche
2 Figuren

Patentansprüche

1. Differenzdruck-Meßzelle mit zwei flüssigkeitsgefüllten, mit Druckzuleitungen versehenen Meßkammern, die durch eine gemeinsame, eine zentrisch angeordnete Meßmembran enthaltende bewegliche Wand getrennt sind, wobei die bewegliche Wand aus einer Halbleiterscheibe besteht, deren als Meßmembran ausgebildeter zentrischer Teil von einer ringförmigen Verdickung mit trapezförmigem Querschnitt umgeben ist, d a d u r c h   g e k e n n z e i c h n e t , daß in der zur Membranebene parallelen Bodenfläche jeder Meßkammer (10, 11) eine Ringnut (18, 19) angebracht ist, deren mittlerer Durchmesser dem der die Meßmembran (14) umgebenden Verdickung (16) entspricht und deren Breite kleiner ist als der Abstand zwischen den Oberkanten der Verdickung (16),
und daß die Druckzuleitungen (12, 13) in die Ringnuten (18, 19) münden.

2. Differenzdruck-Meßzelle nach Anspruch 1,   d a - d u r c h   g e k e n n z e i c h n e t ,   daß der die Verdickung (16) umgebende Teil der beweglichen Wand als Ringmembran (17) ausgebildet ist, die in einen Einspannrand (5) übergeht,
und daß Meßmembran (14) und Ringmembran (17) etwa in der Ebene der einen Stirnfläche der Halbleiterscheibe liegen und der Fassungsrand (5) und die kreisförmige Verdickung (16) sich in Axialrichtung bis zur Ebene der anderen Stirnfläche erstrecken.

3. Differenzdruck-Meßzelle nach Anspruch 2,   d a - d u r c h   g e k e n n z e i c h n e t ,   daß die Ringmembran (17) aus zwei konzentrischen Teilen (17 und 17´) besteht, wobei der an den Fassungsrand (5) anschließende Teil (17´) etwa in der Ebene der einen Stirnfläche der Halbleiterscheibe, der andere Teil (17) in der Ebene der
aus einer Halbleiterscheibe hergestellten beweglichen
Wand (4) liegt und beide Teile über ein hohlzylindrisches Zwischenstück (20) miteinander verbunden sind.

FIG 1

FIG 2